# EUROPÄISCHE PATENTSCHRIFT

(11) **EP 1 238 467 B1**
(45) Veröffentlichungstag und Bekanntmachung des Hinweises auf die Patenterteilung: **05.10.2005**
(21) Anmeldenummer: 00989820.6
(22) Anmeldetag: 01.12.2000
(51) Int. Cl.: H04B 1/16

(54) **ELEKTRONISCHES GERÄT MIT EINEM BETRIEBSMODUS UND EINEM ENERGIESPARENDEN RUHEMODUS UND VERFAHREN ZUM UMSCHALTEN ZWISCHEN BEIDEN MODI**
ELECTRONIC DEVICE WITH AN OPERATIVE MODE AND AN ENERGY-SAVING STANDBY MODE, AND METHOD FOR SWITCHING BETWEEN THESE TWO MODES
APPAREIL ELECTRONIQUE DOTE D'UN MODE DE FONCTIONNEMENT ET D'UN MODE DE REPOS A ECONOMIE D'ENERGIE ET PROCEDE DE COMMUTATION ENTRE CES DEUX MODES

(30) Priorität: 16.12.1999 EP 99125116
(43) Veröffentlichungstag der Anmeldung: 11.09.2002
(73) Patentinhaber: Infineon Technologies AG, 81669 München (DE)
(72) Erfinder: REINER, Robert, 85579 Neubiberg (DE)
(74) Vertreter: Epping - Hermann - Fischer
(86) Internationale Anmeldenummer: PCT/DE2000/004283
(87) Internationale Veröffentlichungsnummer: WO 2001/045280

(56) Entgegenhaltungen:
- EP-A- 0 601 820
- EP-A- 0 609 694
- EP-A- 0 797 308
- WO-A-99/03219
- US-A- 4 857 917
- US-A- 5 790 946

## Beschreibung

Die Erfindung betrifft ein elektronisches Gerät mit einem Betriebsmodus und einem energiesparenden Ruhemodus gemäß dem Oberbegriff des Anspruchs 1 sowie ein Verfahren zum Umschalten zwischen beiden Modi gemäß dem Anspruch 12.

Das Einsatzgebiet der vorliegenden Erfindung erstreckt sind vorzugsweise auf Empfänger (Receiver) und Sender/Empfänger (Transceiver) deren Spannungsversorgung über eine Batterie erfolgt. Um eine rasche Batterieerschöpfung bei diesen Geräten zu vermeiden, kommen Mittel und Verfahren zur Energieeinsparung zur Anwendung. Zur Einsparung elektrischer Energie in Zuständen, bei denen der Betrieb des elektronischen Gerätes nicht erforderlich ist, kann dieses vom normalen Betriebsmodus in einen energiesparenden Ruhemodus - dem sogenannten Standbybetrieb - versetzt werden. Hierbei werden meist all diejenigen Teile des Gerätes abgeschalten, die einen hohen Stromverbrauch verursachen. Lediglich Teile zum Wiedereinschalten in den Betriebsmodus bleiben aktiv. Das Wiedereinschalten erfolgt meist automatisch durch Erkennen eines gültigen externen Signals. Hierdurch wird der Stromverbrauch des elektronischen Gerätes insgesamt drastisch reduziert. Da bei den batteriebetriebenen elektronischen Geräten die Zeit des Ruhemodus in der Regel um ein Vielfaches länger ist als die Zeit des Betriebsmodus, ist es wünschenswert, wenn das Gerät einen sehr sparsamen Stromverbrauch im Ruhemodus besitzt, um die Nutzungszeit der Batterie insoweit zu maximieren.

Aus der EP 0 554 386 B1 ist ein gattungsgemäßes elektronisches Gerät bekannt. Der Empfänger besteht aus einem eingangsseitigen Antennenelement zur Aufnahme eines informationstragenden Signals, hier in Form eines HF-Radiosignals.

Der Begriff Antennenelement ist im Rahmen der vorliegenden Erfindung als eingangsseitiges Element des elektronischen Gerätes definiert, das eine Strahlungsenergie in leitungsgeführte Energie für die Empfangseinheit umwandelt. Als Strahlungsenergie können prinzipiell Funkwellen, Mikrowellen, Lichtwellen oder Wellen eines anderen zum Transport einer Information geeigneten Frequenzspektrums durch das Antennenelement aufgenommen werden. Daher kann das "Antennenelement" beispielsweise auch ein Photoelement sein, um insoweit Lichtwellen aufzunehmen. Sollte eingangsseitig bereits eine leitungsgeführte Energie zur Verfügung stehen, so kann auch auf das Antennenelement unter Ersatz durch eine geeignete Schnittstelle - beispielsweise durch eine Buchsenanordnung - gänzlich verzichtet werden.

Beim vorstehenden Empfänger umfaßt eine dem Antennenelement nachgeschaltete Empfangseinheit einen Demodulator zur Rückgewinnung des NF-Radiosignals als aufgeprägte Grundinformation aus dem diese Information tragenden und insoweit modulierten HF-Signal entsprechend dem senderseitig angewendeten Modulationsverfahren. Eine optische Anzeige für die Betriebsparameter, diverse Bedienelemente zur manuellen Einstellung des Empfängers sowie ein Lautsprecher zur Abstrahlung des NF-Radiosignals werden in ihrem Zusammenwirken von einer zentralen Steuerung kontrolliert. Als Spannungsversorgungseinheit zur Bereitstellung der für den Betrieb des Empfängers erforderlichen Versorgungsspannung ist eine Batterie vorgesehen. Um eine lange Lebensdauer der Batterie zu erzielen, weist der Empfänger einen Betriebsmodus und einen Ruhemodus auf. In der zentralen Steuerung sind Umschaltmittel zum Umschalten zwischen beiden Modi integriert.

Das Umschalten vom Betriebsmodus in den Ruhemodus erfolgt automatisch bei Vorhandensein eines Rauschabschaltungssignals. Im Ruhemodus ist der Empfänger nicht betriebsbereit. Das Aufwecken aus dem Ruhemodus erfolgt durch periodisches Einschalten des Betriebsmodus in festgelegten Zeitabständen. Zu diesem Zwecke läuft im Ruhemodus ein Zeitgeber mit möglichst geringem Energieverbrauch. Ist der Empfänger empfangsbereit, so prüft die Steuerung möglichst schnell, ob eingangsseitig ein gültiges HF-Radiosignal empfangen wird. Ist stattdessen ein Rauschabschaltungssignal vorhanden, so kehrt der Empfänger wieder in den Ruhemodus zurück. Dieses Verfahren weist den Nachteil auf, daß durch das probeweise und oft erfolglose zeitablaufgesteuerte Einschalten des Betriebsmodus ein recht hoher Stromverbrauch stattfindet. Es wird gleichwohl versucht den Stromverbrauch dadurch zu minimieren, daß ein möglichst schnelles Erkennen des eingangsseitig anliegenden Signals erfolgt, um erforderlichenfalls möglichst rasch wieder in den energiesparenden Ruhemodus zurückkehren zu können. Bei diesem Verfahren kann bei nicht kontinuierlicher, d.h. gepulster, Informationsübertragung weiterhin das Problem auftreten, daß der Sender während einer Zeit sendet, in welcher der Empfänger nicht betriebsbereit ist, so daß der Empfänger das informationstragende Signal nicht zuverlässig aufnehmen kann. Um dieses Problem auszuschließen ist es erforderlich, daß entweder der Sender lange genug sendet, oder daß die Zeitabstände des Aufweckens an die gesendete Pulslänge angepaßt sind.

Allgemein bekannt ist auch ein Verfahren zum Aufwecken aus dem Ruhemodus, bei dem die vorstehend diskutierten Probleme dadurch vermieden werden, daß eine ständige Betriebsbereitschaft des elektronischen Gerätes sichergestellt ist, allerdings in einem Ruhemodus mit eingeschränkter Funktionalität. Im Ruhemodus werden hierbei Schaltungsbestandteile mit hohem Stromverbrauch abgeschaltet. Es werden nur solche Schaltungsbestandteile unter Betrieb gehalten, die zur Zustandsüberwachung von eingangsseitigen Einrichtungen - wie Empfänger, Sensoren, Detektoren - dienen. Auf diese Weise kann festgestellt werden, wann wieder Bedarf des Anschaltens der übrigen Schaltungsbestandteile mit hohem Stromverbrauch besteht, um ein Aufwecken aus dem Ruhemodus in den Betriebsmodus auszulösen.

Beispielsweise kann bei einem Empfänger die Empfindlichkeit im Ruhemodus herabgesetzt werden. Der Empfänger kann dann nur grob zwischen systemeigenen und fremden Signalen unterscheiden, verbraucht hierbei jedoch weniger Strom. Sobald ein Signal eintrifft, daß die Selektion zur Beibehaltung des Ruhemodus überwindet, geht der Empfänger voll oder teilweise in Betrieb, um die Gültigkeit des Signals zu überprüfen. Bei diesem Verfahren kann gegenüber der eingangs geschilderten Methode die Signalabgabe vom Sender zwar gepulst erfolgen; andererseits ist der Stromverbrauch wegen der hier notwendigen permanent aktiven Schaltungsbestandteile jedoch in der Regel höher. Dabei sind wegen der herabgesetzten Empfindlichkeit auch Störungen nur schwer von systemeigenen Signalen zu unterscheiden, was zu ungültigen Wechseln in den Betriebsmodus führt. Daraus resultiert ein nachteilig erhöhter Energieverbrauch.

In dem Dokument EP 0 609 694 A2 ist ein System beschrieben, bei dem ein digitales Signal mit einer zusätzlichen niederfrequenten Amplitudenmodulation beaufschlagt wird, daß das Senden des Aufwecksignals mit dem Senden des Informationssignal einhergeht. Ein in diesem System verwendeter Empfänger nutzt den niederfrequenten Signalanteil als Aufweckinformation, die zur Folge hat, daß der Empfänger von einem Energiesparmodus in einen regulären Betriebsmodus wechselt.

In dem Dokument US 5,790,946 wird ein Empfänger, einen regulären Betriebsmodus und einen Energiesparmodus aufweisend, beschrieben, der das Aufwecksignal in zwei Schritten detektiert. Zunächst wird der Signalanteil in einem fixen Frequenzbereich detektiert und anschließend nach der Demodulation dessen Datenrate mit einem vorgegebenen Wert verglichen. Entspricht das Signal den Vorgaben, wird es als Aufwecksignal identifiziert.

In dem Dokument EP 0 601 820 A1 wird ein Gerät, das eine Pagereinheit und eine Telefoneinheit umfaßt, beschrieben, bei dem im Energiesparmodus nur die Pagereinheit aktiv ist. Die Pagereinheit kann bei einem eingehenden Anruf detektieren, ob dieser für die Telefoneinheit bestimmt ist. In diesem Fall wird die Telefoneinheit aktiviert.

In dem Dokument EP 0 797 308 A2 ist die Aufweckinformation als Bitmuster innerhalb eines Signals enthalten.

In dem Dokument WO 99/03219 ist eine Infrarotaufweckschaltung beschrieben, die eine durch Frequenz und Dauer bestimmte Pulsfolge detektiert.

In dem Dokument US 4,857,917 ist eine Aufweckschaltung beschrieben, die eine Datenfolge nach dem Senden eines Aufweckpulses bestimmter Länge detektiert.

Es ist die Aufgabe der Erfindung ein elektronisches Gerät mit einem Betriebsmodus und einem energiesparenden Ruhemodus dahingehend weiter zu verbessern, daß einerseits der Stromverbrauch im Ruhemodus minimal ist, und daß andererseits ein zuverlässiges Umschalten von dem energiesparenden Ruhemodus in den Betriebsmodus bedarfsgerecht und schnell sichergestellt ist.

Die Aufgabe wird ausgehend von einem elektronischen Gerät mit einem Betriebsmodus und einem energiesparenden Ruhemodus gemäß dem Oberbegriff des Anspruchs 1 in Verbindung mit dessen kennzeichnenden Merkmalen gelöst. Bezüglich eines Verfahrens zum Umschalten von einem energiesparenden Ruhemodus in einen Betriebsmodus wird die Aufgabe durch den unabhängigen Anspruch 12 gelöst. Vorteilhafte Weiterbildungen der Erfindung sind in den abhängigen Ansprüchen angegeben.

Die Erfindung schließt bezüglich des elektronischen Gerätes mit Betriebsmodus und Ruhemodus die technische Lehre ein, daß das eingehende informationstragende Signal mehrere modulierte Frequenzbereiche (Fg, Fa) umfaßt, von denen mindestens ein Frequenzbereich (Fg) für die von einer Empfangseinheit zu verarbeitenden Grundinformation (g) vorgesehen ist und der andere Frequenzbereich (Fa) zur Ansteuerung einer Umschalteinheit zum Umschalten zwischen dem Betriebsmodus und dem Ruhemodus eine Aufweckinformation (a) beinhaltet.

Diese Lösung bietet den Vorteil, daß zur Umsetzung der Aufweckfunktion ein separater, von der Übertragung der Grundinformation (g) - beispielsweise einer Sprachinformation - abgetrennter Frequenzbereich (Fa) allein zur Verfügung steht, was ein bedarfsgerechtes Aufwecken mit einer starken systemeigenen Aufweckinformation (a) gewährleistet. Der Datenaustausch mit dem Sender kann kontinuierlich erfolgen, wodurch kein Informationsverlust auftritt und wodurch es auch möglich ist bei einem Transceiver ein sogenanntes Backscatterverfahren zum Rücksenden von Informationen einzusetzen, was zusätzlich Sendeleistung einspart. Es brauchen komplizierte Gültigkeitstest des Inhalts des gesamten informationstragenden Signals im Betriebsmodus nicht durchgeführt werden, was die Aufweckzeit darüber hinaus auch verkürzt. Da sich der separate, die Aufweckinformation (a) beinhaltende Frequenzbereich (Fa) passiv aus dem eingehenden informationstragenden Signal filtern läßt, ist im Ruhemodus der Stromverbrauch minimal. Es sind zur Erkennung des Signals somit keine oder wenig aktiven stromzehrenden Schaltungsbestandteile erforderlich.

Insbesondere kann der letztgenannte Vorteil schaltungstechnisch dadurch umgesetzt werden, daß eine der Antenneneinheit nachgeschaltete Filtereinheit den Frequenzbereich (Fa) für die Aufweckinformation (a) von dem informationstragenden Signal abtrennt und einer passiven Demodulationseinheit zur Demodulation der Aufweckinformation (a) zuführt, welche die Umschalteinheit schließlich ansteuert.

Eine weitere die Erfindung verbessernde Maßnahme besteht darin, daß ein einziges Filterelement sowohl zur Frequenzfilterung für den Frequenzbereich (Fg) der Grundinformation (g) als auch zur Frequenzfilterung für den Frequenzbereich (Fa) der Aufweckinformation (a) verwendet werden kann, um insoweit den schaltungstechnischen Bauteileaufwand zu minimieren. Dabei ist das Filterelement vorzugsweise nach Art eines SAW-Filters (SAW: Surface Acoustic Waves) ausgebildet, der sich bekanntlich mit hoher Reproduktionsgenauigkeit und Stabilität herstellen läßt. Die Integration der Frequenzfilterung in einem einzigen Bauteil ist mit dem SAW-Filter deshalb auch von Vorteil, weil sich hier der Amplitudengang und der Phasengang unabhängig voneinander dimensionieren lassen. Das eröffnet die Möglichkeit, daß die in dem Empfänger angewendeten schmalbandigen Bandpaßfilter gegebenenfalls in einfacher Weise mit Dispersionsfiltern kombiniert werden können.

In diesem Zusammenhang sieht eine weitere Verbesserung der Erfindung vor, daß zur Überhöhung der Impulse der Frequenzbereich (Fa) der Aufweckinformation (a) mittels Chirpkompression bearbeitet ist. Die allgemein im Stand der Technik bekannte Chirpkompression bedient sich eines Impulses, dessen Trägerfrequenz während des Impulses definiert ansteigt oder abfällt. Dieser Impuls wird mit maximal erlaubter Leistung vom Sender über eine relativ lange Zeit abgestrahlt. Auf der Empfängerseite durchläuft dieser Impuls das SAW-Filterelement mit einem passiven Kompressionsfilter, das für verschiedenen Frequenzen unterschiedliche Laufzeiten besitzt. Somit konzentriert sich die empfangene Leistung in einer relativ kurzen Zeitspanne, wodurch sich die Amplitude erhöht. Diese Überhöhung der Impulse des Frequenzbereichs (Fa) der Aufweckinformation (a) durch die Chirpkompression schafft eine Verbesserung der Störanfälligkeit für die Aufweckfunktion und eine Verringerung der Fehlerrate, da das eingehende informationstragende Signal nicht nur nach der Frequenz sondern auch entsprechend der Chirp-Funktion selektiert werden kann. Die mit der Chirptechnik mögliche Verbesserung des Signal/Rauschverhältnisses kann auch wahlweise zur Verringerung der Sendeleistung bzw. zur Vergrößerung von Reichweite und Störabstand genutzt werden.

Eine weitere die Erfindung hinsichtlich einer zuverlässigen passiven Erkennung des Aufwecksignals verbessernde Maßnahme sieht vor, daß die Aufweckinformation (a) als Impulsfolge (Burst) moduliert ist. Diese Maßnahme kann unabhängig von der vorstehend erläuterten Chirpkompression erfolgen und stellt ebenfalls eine Möglichkeit zur Unterscheidung von Störungen dar. Insbesondere kann zur Unterscheidung zwischen Störungen und systemeigenen Signalen die Aufweckinformation (a) eine frequenzmodulierte Impulsfolge sein, wobei die passive Demodulationseinheit in einfacher Weise nach Art eines passiven auf die Impulsfolgenfrequenz abgestimmten Schwingkeises aufgebaut sein kann, um die Impulsfolge auszufiltern. Dabei liegt in der Art der Modulation - hier also in der Frequenz der Impulsfolge - das Kennzeichen, um das systemeigene Signal zuverlässig von den Störungen zu unterscheiden.

Die Erfindung läßt es zu, für beide Frequenzbereiche (Fa, Fg) je ein geeignetes den standardisierten Zulassungsbedingungen unterliegendes Frequenzband auszuwählen. So kann der die Aufweckinformation (a) beinhaltende Frequenzbereich (Fa) vorteilhafter Weise in dem allgemein nutzbaren Frequenzband der Bandbreite von 869,4 bis 869,65 MHz liegen. Über dieses Frequenzband sind nach CEPT/ERC/REC 70-03 kurze Impulse mit relativ hoher Leistung vom bis zu ERP = 500 mW als Aufweckinformation (a) übertragbar. Die dabei geforderte Begrenzung des zulässigen Tastverhältnisses auf 360 s in 1 h wirkt sich bei der Aufweckfunktionalität des Empfängers nicht nachteilig aus.

Der die Grundinformation (g) beinhaltende Frequenzbereich (Fg) kann vorteilhafter Weise in der Bandbreite von 869,7 MHz bis 870,0 MHz als Frequenzband zur Übertragung mit geringer Sendeleistung bis zu ERP = 5 mW liegen, da der aus dem Ruhemodus in den normalen Betriebsmodus versetzte Empfänger eine größere Empfindlichkeit bietet. In diesem Frequenzband ist ein Senden im Dauerbetrieb zugelassen.

Weitere die Erfindung verbessernde Maßnahmen sind in den abhängigen Ansprüchen angegeben oder werden nachstehend gemeinsam mit der Beschreibung eines bevorzugten Ausführungsbeispiels der Erfindung anhand der Figuren näher dargestellt. Es zeigt:
Figur 1 ein Blockschaltbild einer Anordnung zum Umschalten von einem energiesparenden Ruhemodus in einen Betriebsmodus bei einem Empfänger und
Figur 2 ein Zustandsdiagramm zur Darstellung der Funktionsweise für das Umschalten zwischen den Modi mit einer Anordnung nach Figur 1.

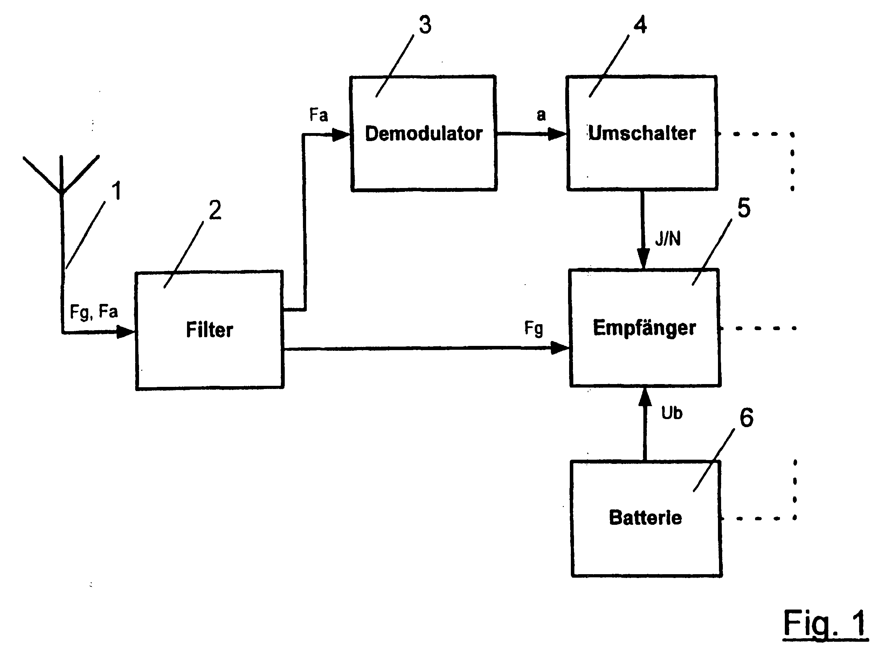

Der Empfänger besitzt gemäß Figur 1 eingangsseitig ein Antennenelement 1 über das ein informationstragendes Signal in Form eines modulierten HF-Signals aufgenommen wird. Das informationstragende Signal umfaßt zwei modulierte Frequenzbereiche (Fg, Fa), von denen ein Frequenzbereich (Fg) für die Grundinformation (g), beispielsweise ein auf die HF-Trägerfrequenz moduliertes NF-Signal (Sprache), vorgesehen ist. Der andere Frequenzbereich (Fa) beinhaltet eine Aufweckinformation (a) die vom Sender abgestrahlt wird, um den Empfänger von einem Ruhemodus in einen Betriebsmodus zu schalten, damit eine Grundinformation (g) nachfolgend empfangen und verarbeitet werden kann.

Zunächst trennt eine der Antenneneinheit 1 nachgeschaltete Filtereinheit 2 den Frequenzbereich (Fa) für die Aufweckinformation (a) von dem eingehenden informationstragenden Signal ab. Die Filtereinheit 2 ist nach Art eines SAW-Filters ausgebildet, wobei im Frequenzbereich (Fa) die Aufweckinformation (a) mittels Chirpimpulsen moduliert ist und vom Filterelement 2 entsprechend ausgewertet wird. Die Aufweckinformation (a) kann hier im Frequenzbereich (Fa) als Impulsfolge (Burst) vorliegen.

Die im abgetrennten Frequenzbereich (Fa) enthaltene Impulsfolge wird einer dem Filterelement 2 nachgeschalteten passiven Demodulationseinheit 3 zur Demodulation der Aufweckinformation (a) zugeführt. Die passive Demodulationseinheit 3 ist nach Art eines passiven auf die Impulsfolgenfrequenz abgestimmten Schwingkeises aufgebaut, um die die Aufweckinformation (a) beinhaltende Impulsfolge aus dem Frequenzbereich (Fa) auszufiltern.

Die so gewonnene Aufweckinformation (a) geht einer Umschalteinheit 4 zu. Die Umschalteinheit 4 schaltet bei eingangsseitig anliegender Aufweckinformation (a) eine Empfangseinheit 5 und gegebenenfalls weitere Bestandteile des Empfängers (Strichlinie) in Betrieb. Jetzt ist die Empfangseinheit 5 in der Lage die nachfolgende Grundinformation (g) aus dem Frequenzbereiches (Fg) zu selektieren, die ihr vom Filterelement 2 aus zur Verfügung gestellt wird.

Für den Empfänger ist eine Spannungsversorgungseinheit 6 in Form einer Batterie vorgesehen. Die Spannungsversorgungseinheit 6 versorgt die Empfangseinheit 5 und gegebenenfalls weitere Bestandteile des Empfängers (Strichlinie) mit der erforderlichen Versorgungsspannung.

Da die Umschalteinheit 4 zum Umschalten zwischen dem Betriebsmodus und dem Ruhemodus dient, werden die Empfangseinheit 5 und gegebenenfalls weitere aktive Bestandteile dann wieder in den Ruhemodus versetzt, wenn eine Aufweckinformation (a) nicht vorliegt, oder wenn eine konkrete Information zum Einschalten des Ruhemodus von der Empfangseinheit 5 oder nachfolgenden Logikschaltungen vorgegeben wird.

Die vorstehend beschriebene Anordnung zum Umschalten vom energiesparenden Ruhemodus in den Betriebsmodus besitzt im Ganzen betrachtet die folgende Funktionsweise.

Zunächst wird ein informationstragendes Signal mit mehreren modulierten Frequenzbereichen (Fg, Fa) empfangen. Daraufhin wird das Signal hinsichtlich des Frequenzbereiches (Fg) für eine Grundinformation (g) und des Frequenzbereiches (Fa) für eine Aufweckinformation (a) gefiltert. Anschließend erfolgt ein Demodulieren des Frequenzbereiches (Fa) zur Gewinnung der Aufweckinformation (a). Das Aufwecken aus dem Ruhemodus in den Betriebsmodus geschieht dann, wenn im Frequenzbereich (Fa) eine Aufweckinformation (a) enthalten ist. Anschließend kann die Grundinformation (g), die in dem Frequenzbereiches (Fg) enthalten ist in geeigneter Weise verarbeitet werden. Anderenfalls wird des Ruhemodus solange beibehalten, solange im Frequenzbereich (Fa) eine Aufweckinformation (a) nicht enthalten ist.

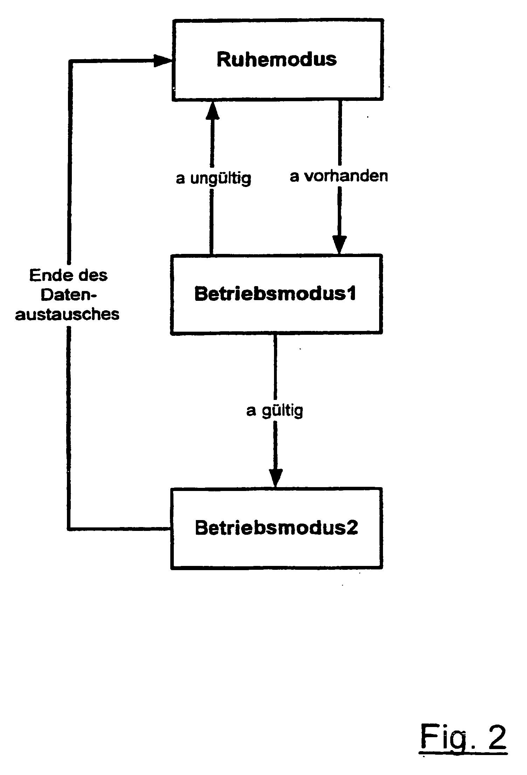

Gemäß Figur 2 befindet sich die Schaltung in einem ersten Zustand im stromsparenden Ruhemodus. Hierbei wird der Frequenzbereiches (Fa) unter minimalem Stromverbrauch mittels vorzugsweise passiver Bauelemente hinsichtlich des Vorhandenseins einer Aufweckinformation (a) überwacht. Für den Übergang in den Betriebsmodus1 als einen zweiten Schaltungszustand ist das Vorhandensein der Aufweckinformation a erforderlich. Im Betriebsmodus 1 wird nun die Aufweckinformation unter geringem Stromverbrauch auf ihre Gültigkeit überprüft. Der geringe Stromverbrauch resultiert ebenfalls aus der Verwendung meist passiver Bauelemente für diesen Prüfvorgang. Ist die Aufweckinformation a nicht gültig, so geht die Schaltung wieder in den Zustand des Ruhemodus über; anderenfalls erfolgt ein Übergang in den Betriebsmodus 2 als einen dritten Schaltungszustand. Im Betriebsmodus 2 wird als Vollbetriebsmodus unter regulärem Stromverbrauch der Schaltung der Frequenzbereich (Fg) empfangen und die darin enthaltene Grundinformation (g) nach Demodulation verarbeitet. Gegebenenfalls kann auch ein Senden einer Rückantwort mittels hierfür vorgesehener Schaltungsbestandteile erfolgen. Nachdem die Grundinformation g verarbeitet ist bzw. der Informationsaustauch beendet ist, wird erneut der erste Schaltungszustand des stromsparenden Ruhemodus eingenommen.

Die Erfindung beschränkt sich nicht allein auf das vorstehend beschriebene bevorzugte Ausführungsbeispiel. Vielmehr sind eine Anzahl von Varianten denkbar, die auch bei grundsätzlich anders gearteter Ausführung von der beanspruchten Erfindung Gebrauch machen. Insbesondere ist die Erfindung nicht allein auf einen Empfänger der vorstehend beschriebenen Art anwendbar, sondern allgemein auf alle elektronischen Geräte, bei denen eine Funktion des Umschaltens von einem energiesparenden Ruhemodus in einen Betriebsmodus realisiert werden soll. Es ist ebenfalls denkbar die Erfindung nicht nur auf batteriebetriebene sondern auch auf netzbetriebene elektronische Geräte - mit einer Spannungsversorgung über beispielsweise ein Bussystem - anzuwenden, um insoweit den Stromverbrauch im Ruhemodus zu reduzieren. Weiterhin kann das Umschaltens von einem energiesparenden Ruhemodus in einen (Voll-) Betriebsmodus auch unter Durchlauf von Zwischenmodi - beispielsweise einem Informationsgültigkeitsprüfmodus - erfolgen.

## Patentansprüche

1. Elektronisches Gerät mit einem Betriebsmodus und einem energiesparenden Ruhemodus, umfassend
- ein eingangsseitiges Antennenelement (1) zur Aufnahme eines informationstragenden modulierten Signals, das mehrere Frequenzbereiche (Fg, Fa), von denen mindestens ein Frequenzbereich (Fg) die Grundinformation (g) beinhaltet und ein anderer Frequenzbereich (Fa) eine Aufweckinformation (a) beinhaltet, umfaßt,
- eine der Antenneneinheit (1) nachgeschaltete Filtereinheit, die den Frequenzbereich (Fa) für die Aufweckinformation (a) abtrennt und einer Demodulationseinheit (3) zur Demodulation der Aufweckinformation (a) zuführt,
- eine Empfangseinheit (5), die ein Bestandteil eines Empfängers ist, zur Verarbeitung der dem Signal aufgeprägten Grundinformation (g),
- eine Spannungsversorgungseinheit (6) zur Bereitstellung der für den Betrieb erforderlichen Versorgungsspannung sowie
- eine Umschalteinheit (4), die beim Anliegen einer Aufweckinformation (a) vom Ruhemodus in den Betriebsmodus umschaltet, wobei die Empfangseinheit (5) und gegebenenfalls weitere Bestandteile des Empfängers in Betrieb genommen werden,
**dadurch gekennzeichnet, daß**
die Umschalteinheit (4) ausgebildet ist, die Aufweckinformation (a), die in Form eines einzigen Impulses oder als Impulsfolge moduliert ist, zu detektieren.

2. Elektronisches Gerät nach Anspruch 1,
**dadurch gekennzeichnet, daß**
die Demodulationseinheit (3) die Umschalteinheit (4) ansteuert, wobei die Demodulationseinheit (3) keine oder wenige aktive Schaltungsbestandteile umfaßt.

3. Elektronisches Gerät nach Anspruch 2,
**dadurch gekennzeichnet, daß**
das Filterelement (2) sowohl zur Frequenzfilterung für den Frequenzbereich (Fg) der Grundinformation (g) als auch zur Frequenzfilterung für den Frequenzbereich (Fa) der Aufweckinformation (a) ausgebildet ist.

4. Elektronisches Gerät nach Anspruch 2,
**dadurch gekennzeichnet, daß**
die Filtereinheit (2) nach Art eines SAW-Filters ausgebildet ist.

5. Elektronisches Gerät nach einem der vorstehenden Ansprüche,
**dadurch gekennzeichnet, daß**
zur Überhöhung der Impulse der Frequenzbereich (Fa) der Aufweckinformation (a) mittels Chirpkompression bearbeitet ist.

6. Elektronisches Gerät nach einem der vorstehenden Ansprüche,
**dadurch gekennzeichnet, daß**
zur Unterscheidung von Störungen die Aufweckinformation (a) eine Impulsfolge ist, wobei die Demodulationseinheit (3), die keine oder wenige aktive Schaltungsbestanteile umfaßt, nach Art eines passiven auf die Impulsfolgenfrequenz abgestimmten Schwingkreises aufgebaut ist, um die Impulsfolge auszufiltern.

7. Elektronisches Gerät nach einem der vorstehenden Ansprüche,
**dadurch gekennzeichnet, daß**
der die Aufweckinformation (a) beinhaltende Frequenzbereich (Fa) in der Bandbreite von 869,4 bis 869,96 MHz als genormtes allgemein nutzbares Frequenzband liegt.

8. Elektronisches Gerät nach einem der vorstehenden Ansprüche,
**dadurch gekennzeichnet, daß**
der die Grundinformation (g) beinhaltende Frequenzbereich (Fg) in der Bandbreite von 869,7 bis 870,0 MHz als genormtes Frequenzband zur Übertragung mit geringer Sendeleistung liegt.

9. Elektronisches Gerät nach einem der vorstehenden Ansprüche,
**dadurch gekennzeichnet, daß**
die Spannungsversorgungseinheit (6) eine Einwegbatterie oder ein Akkumulator ist.

10. Elektronisches Gerät nach einem der vorstehenden Ansprüche,
**dadurch gekennzeichnet, daß**
die Ausgestaltung des Antennenelements (1) auf die Art des verwendeten informationstragenden Signals abgestimmt ist.

11. Elektronisches Gerät nach einem der vorstehenden Ansprüche,
**dadurch gekennzeichnet, daß**
das Antennenelement (1) als ein Dipol, als eine Spule, als eine Kondensatorplatte oder als ein Photoelement ausgebildet ist.

12. Verfahren zum Umschalten von einem energiesparenden Ruhemodus in einem Betriebsmodus, insbesondere bei einem elektronischen Gerät nach einem der vorstehenden Ansprüche, umfassend die folgenden Schritte :
- Empfangen eines informationstragenden modulierten Signals mit mehreren Frequenzbereichen (Fg, Fa),
- Filtern des Signals hinsichtlich des Frequenzbereiches (Fg) für eine Grundinformation (g) und des Frequenzbereiches (Fa) für eine Aufweckinformation (a),
- Demodulieren des Frequenzbereiches (Fa) zur Gewinnung der Aufweckinformation (a),
- Aufwecken aus dem Ruhemodus in den Betriebsmodus, wenn im Frequenzbereich (Fa) eine Aufweckinformation (a) enthalten ist, die in Form eines einzigen Impulses oder als Impulsfolge moduliert ist, und anschließendes Verarbeiten der Grundinformation (g), die in dem Frequenzbereich (Fg) enthalten ist, beziehungsweise Beibehalten des Ruhemodus solange im Frequenzbereich (Fa) eine Aufweckinformation (a) nicht enthalten ist.

## Claims

1. Electronic appliance having an operating mode and an energy saving rest mode, comprising
- an input-side antenna element (1) for receiving a modulated signal carrying information, which comprises a number of frequency bands (Fg, Fa), of which at least one frequency band (Fg) contains the basic information (g) and another frequency band (Fa) contains wake-up information (a),
- a filter unit which is connected downstream from the antenna unit (1) which separates the frequency band (Fa) for the wake-up information (a) and supplies it to a demodulation unit (3) for demodulation of the wake-up information (a),
- a receiving unit (5), which is a component of a receiver, for processing of the basic information (g) applied to the signal,
- a voltage supply unit (6) for provision of the supply voltage that is required for operation, as well as
- a switching unit (4) which switches from the rest mode to the operating mode when wake-up information (a) is applied, with the receiving unit (5) and possibly further components of the receiver being operated,
**characterized in that**
the switching unit (4) is designed to detect the wake-up information (a), which is modulated in the form of a single pulse or as a pulse sequence.

2. Electronic appliance according to Claim 1,
**characterized in that**
the demodulation unit (3) drives the switching unit (4), with the demodulation unit (3) having no or only a small number of active circuit components.

3. Electronic appliance according to Claim 2,
**characterized in that**
the filter element (2) is designed for frequency filtering for the frequency band (Fg) for the basic information (g), as well as for frequency filtering for the frequency band (Fa) for the wake-up information (a).

4. Electronic appliance according to Claim 2,
**characterized in that**
the filter unit (2) is in the form of an SAW filter.

5. Electronic appliance according to one of the preceding claims,
**characterized in that**
the frequency band (Fa) for the wake-up information (a) is processed by means of chirp compression in order to increase the magnitude of the pulses.

6. Electronic appliance according to one of the preceding claims,
**characterized in that**,
in order to distinguish it from disturbances, the wake-up information (a) is a pulse sequence, with the demodulation unit (3), which comprises no or only a small number of active circuit components, being designed in the form of a passive tuned circuit which is tuned to the pulse repetition frequency, in order to filter out the pulse sequence.

7. Electronic appliance according to one of the preceding claims,
**characterized in that**
the frequency band (Fa) which includes the wake-up information (a) is in the form of a standardized, generally usable frequency band in the band range from 869.4 to 869.96 MHz.

8. Electronic appliance according to one of the preceding claims,
**characterized in that**
the frequency band (Fg) including the basic information (g) is in the form of a standardized frequency band for transmission at a low transmission power level in the band range from 869.7 MHz to 870.0 MHz.

9. Electronic appliance according to one of the preceding claims,
**characterized in that**
the voltage supply unit (6) is a disposable battery or a rechargeable battery.

10. Electronic appliance according to one of the preceding claims,
**characterized in that**
the configuration of the antenna element (1) is matched to the nature of the signal which is used to carry information.

11. Electronic appliance according to one of the preceding claims,
**characterized in that**
the antenna element (1) is in the form of a dipole, a coil, a capacitor plate or a photoelement.

12. Method for switching from an energy saving rest mode to an operating mode, in particular for an electronic appliance as claimed in one of the preceding claims, comprising the following steps:
- reception of a modulated signal carrying information with a number of frequency bands (Fg, Fa),
- filtering of the signal with regard to the frequency band (Fg) for basic information (g) and with regard to the frequency band (Fa) for wake-up information (a),
- demodulation of the frequency band (Fa) in order to obtain the wake-up information (a),
- waking up from the rest mode to the operating mode when the frequency band (Fa) contains wake-up information (a), which is modulated in the form of a single pulse or as a pulse sequence, followed by processing of the basic information (g) which is contained in the frequency band (Fg) or remaining in the rest mode for as long as no wake-up information (a) is contained in the frequency band (Fa).

## Revendications

1. Appareil électronique ayant un mode de fonctionnement et un mode de repos à économie d'énergie comprenant
- un élément (1) d'antenne, côté entrée, de réception d'un signal modulé portant l'information, qui comprend plusieurs domaines (Fg, Fa) de fréquence, dont au moins un domaine (Fg) de fréquence contient l'information (g) de base et un autre domaine (Fa) de fréquence contient une information (a) de réveil ;
- une unité de filtrage, qui est montée en aval de l'unité (1) d'antenne, qui sépare le domaine (Fa) de fréquence pour l'information (a) d'éveil et qui l'envoie à une unité (3) de démodulation de l'information (a) d'éveil ;
- une unité (5) de réception, qui fait partie d'un récepteur de traitement de l'information (g) de base appliquée au signal ;
- une unité (6) d'alimentation en tension pour procurer la tension d'alimentation nécessaire au fonctionnement, ainsi que
- une unité (4) de commutation qui, lors de l'application d'une information (a) d'éveil, commute du mode de repos au mode de fonctionnement l'unité (5) de réception et, le cas échéant, d'autres éléments constitutifs du récepteur étant mis en fonctionnement,
**caractérisé en ce que**
l'unité (4) de commutation est constituée de façon à détecter l'information (a) de réveil qui est modulée sous la forme d'une impulsion unique ou d'un train d'impulsions.

2. Appareil électronique suivant la revendication 1,
**caractérisé en ce que**
l'unité (3) de démodulation commande l'unité (4) de commutation, l'unité (3) de démodulation ne comprenant pas d'éléments constitutifs actifs de circuit ou n'en contenant que peu.

3. Appareil électronique suivant la revendication 2,
**caractérisé en ce que**
l'élément (2) de filtrage est constitué tant pour le filtrage en fréquence du domaine (Fg) de fréquence de l'information (g) de base que pour le filtrage en fréquence du domaine (Fa) de fréquence de l'information (a) de réveil.

4. Appareil électronique suivant la revendication 2,
**caractérisé en ce que**
l'unité (2) de filtrage est constituée à la façon d'un filtre SAW.

5. Appareil électronique suivant l'une des revendications précédentes,
**caractérisé en ce que**
pour élever les impulsions du domaine (Fa) de fréquence, l'information (a) de réveil est traitée au moyen d'une compression chirp.

6. Appareil électronique suivant l'une des revendications précédentes,
**caractérisé en ce que**
pour distinguer des parasites, l'information (a) de réveil est un train d'impulsions, l'unité (3) de démodulation, qui ne comprend pas d'éléments constitutifs actifs de circuit ou qui n'en contient que peu, étant constituée à la façon d'un circuit oscillant passif accordé à la fréquence du train d'impulsions pour filtrer le train d'impulsions.

7. Appareil électronique suivant l'une des revendications précédentes,
**caractérisé en ce que**
le domaine (Fa) de fréquence contenant l'information (a) de réveil est sous la forme d'une bande de fréquence utilisable d'une manière générale et normée dans la largeur de bande de 869,4 à 869,96 MHz.

8. Appareil électronique suivant l'une des revendications précédentes,
**caractérisé en ce que** le domaine (Fg) de fréquence contenant l'information (g) de base est sous la forme d'une bande de fréquence normée de transmission d'une petite puissance d'émission dans la largeur de bande de 869,7 à 870,0 MHz.

9. Appareil électronique suivant l'une des revendications précédentes,
**caractérisé en ce que**
l'unité (6) d'alimentation en tension est une pile ou un accumulateur.

10. Appareil électronique suivant l'une des revendications précédentes,
**caractérisé en ce que**
la conformation de l'élément (1) d'antenne est accordée au type du signal portant l'information qui est utilisée.

11. Appareil électronique suivant l'une des revendications précédentes,
**caractérisé en ce que**
l'élément (1) d'antenne est constitué sous la forme d'un dipôle, sous la forme d'une bobine, sous la forme d'un plateau de condensateur ou sous la forme d'un photo-élément.

12. Procédé de commutation d'un mode de repos à économie d'énergie à un mode de fonctionnement, notamment dans un appareil électronique suivant l'une des revendications précédentes, comprenant les stades suivants :
- réception d'un signal modulé et portant l'information ayant plusieurs domaines (Fg, Fa) de fréquence ;
- filtrage du signal du point de vue du domaine (Fg) de fréquence pour une information (g) de base et du domaine (Fa) de fréquence pour une information (a) d'éveil ;
- démodulation du domaine (Fa) de fréquence pour récupérer l'information (a) de réveil ;
- passage du mode de repos au mode de fonctionnement si il est contenu dans le domaine (Fa) de fréquence une information (a) de réveil qui est modulée sous la forme d'une impulsion unique ou d'un train d'impulsions et ensuite traitement de l'information (g) de base qui est contenue dans le domaine (Fg) de fréquence ou conservation du mode de repos tant qu'une information (a) de réveil n'est pas contenue dans le domaine (Fa) de fréquence.
